# EUROPÄISCHE PATENTSCHRIFT

(11) **EP 0 748 254 B1**
(45) Veröffentlichungstag und Bekanntmachung des Hinweises auf die Patenterteilung: **06.05.1998**
(21) Anmeldenummer: 95908903.8
(22) Anmeldetag: 04.02.1995
(51) Int. Cl.: B01J 23/96

(54) **VERFAHREN ZUR REGENERIERUNG EINES KATALYSATORS**
PROCESS FOR REGENERATING A CATALYST
PROCEDE DE REGENERATION D'UN CATALYSEUR

(30) Priorität: 01.03.1994 DE 4406588
(43) Veröffentlichungstag der Anmeldung: 18.12.1996
(73) Patentinhaber: Solvay Deutschland GmbH, D-30173 Hannover (DE)
(72) Erfinder: NEUENFELDT, Gerhard, D-31629 Estorf (DE); OTTMANN, Alfred, D-30627 Hannover (DE); SCHINDLER, Hubert, D-31311 Uetze (DE)
(74) Vertreter: Lauer, Dieter, Dr.
(86) Internationale Anmeldenummer: EP9500403
(87) Internationale Veröffentlichungsnummer: WO9523643

(56) Entgegenhaltungen:
- WO-A-91/04097
- WO-A-94/20423
- US-A- 4 822 760
- DATABASE WPI,n 85-174415,Derwent Publications Ltd,London,GB; & JP-A-60102943(DAIDO) 07-06-1985 *Die ganze Zusammenfassung*

## Beschreibung

Die Erfindung betrifft ein Verfahren zur Regenerierung eines Katalysators, der zur katalytischen Behandlung von Abwässern, die halogenorganische insbesondere chlororganische Verbindungen enthalten, verwendet wurde.

Zur Reinigung von Abwässern, die halogenorganische insbesondere chlororganische Verbindungen enthalten, sind verschiedene Verfahren und Methoden bekannt.

Zum Beispiel:
- naßoxidative Verbrennung
- biologische Behandlung
- Behandlung mit Ozon
- thermisch-alkalische Behandlung
- katalytische Behandlung.

Die bekannten Verfahren zur katalytischen Behandlung von Abwässern, die insbesondere chlororganische Verbindungen enthalten, setzen z. B. Alkali oder Erdalkaliverbindungen oder Edelmetalle oder Edelmetallverbindungen als Katalysator ein. So ist bekannt, daß die Dechlorierung der im Abwasser enthaltenden chlororganischen Verbindungen in Gegenwart von Platin, Palladium oder Rhodium sehr gut gelingt, wobei Palladium die größte Aktivität besitzt. Weitere Untersuchungen zeigten, daß die Wahl des Trägermaterials für die Katalysatoraktivität nicht zu unterschätzen ist. So ist bekannt, daß Palladium auf Aluminiumoxid als Träger eine geringere Aktivität als Palladium auf Kohlenstoff als Träger besitzt. Es ist weiterhin bekannt, daß bei der katalytischen Dechlorierung von chlororganischen Verbindungen die Aktivität eines kohlenstoffgeträgerten Palladiumkatalysators bei längerer Behandlungsdauer nachläßt. Die bekannte Methode, daß durch Waschen mit Ammoniumhydroxid die ursprüngliche Aktivität des Katalysators wieder hergestellt werden kann, scheitert jedoch, wenn industrielle Abwässer behandelt werden sollen, die neben den chlororganischen Verbindungen auch organische und anorganische Verbindungen enthalten.

Gemäß EP 0 467 053 wird zur Regenerierung eines geträgerten Alkalimetallkatalysators vorgeschlagen, den Katalysator nacheinander mit einem inerten Lösungsmittel, vorzugsweise Hexan, einem niederen Alkohol und gegebenenfalls mit Wasser zu spülen und danach zu trocknen.

Dieses Verfahren führt jedoch bei geträgerten Edelmetallkatalysatoren nicht zum Erfolg.

Die JP-A-60 102 943 beschreibt ein Verfahren zur Regenerierung eines Oxidationskatalysators, wobei der Katalysator zunächst mit organischen Lösemitteln behandelt und danach mit Wasser gewaschen wird.

Die Aufgabe der Erfindung besteht darin, die Aktivität von Edelmetallkatalysatoren über einen langen Zeitraum zu erhalten, wobei die kontinuierliche Arbeitsweise der katalytischen Abwasserbehandlung in Gegenwart von Wasserstoff erhalten bleiben soll.

Erfindungsgemäß wird der geträgerte Edelmetallkatalysator mit polarem sauerstoffhaltigem organischem Lösemittel, Lösemittelgemisch oder Lösemittel-Säuregemisch und/oder mit Säure behandelt, wobei sich gegebenenfalls eine thermische Behandlung anschließen kann.

Es hat sich als günstig erwiesen, daß zur Gewährleistung eines kontinuierlichen Ablaufs der Abwasserbehandlung mindestens zwei mit Katalysator gefüllte Reaktoren installiert werden, die so geschaltet sind, daß sie wechselweise zur Dehalogenierung des Abwassers oder zur Regenerierung des Katalysators zur Verfügung stehen.

Erfindungsgemäß können an sich bekannte geträgerte Edelmetallkatalysatoren regeneriert werden, die zur katalytischen Abwasserbehandlung in Gegenwart von Wasserstoff eingesetzt wurden.

Als Edelmetalle können Metalle der 8. Nebengruppe des PSE z. B. Platin, Palladium, Iridium oder Rhodium, vorzugsweise Palladium, allein oder in Kombination miteinander verwendet werden.

Grundsätzlich können alle gebräuchlichen inerten, insbesondere keramische Trägerstoffe wie sie in der Katalyse verwendet werden, eingesetzt werden.

Bevorzugt sind Oxide z. B. von Aluminium, Magnesium, Zirkon, Silicium, Titan oder Carbide z. B. Siliciumcarbid oder Kombinationen dieser Stoffe.

Weitere inerte, an sich bekannte Trägerstoffe können Kohlenstoff oder Kombinationen von Kohlenstoff mit den obengenannten Oxiden und/oder Carbiden in Pulverform oder als Formkörper sein.

In einer bevorzugten Ausführungsform wird eine Kombination aus einem Oxid mit Kohlenstoff als Trägermaterial verwendet. Besonders vorteilhaft haben sich Kombinationen erwiesen, in denen der Oxid-Anteil mindestens 50 Gew.-% des Trägers beträgt.

In einer bevorzugten Variante wurden Edelmetallkatalysatoren auf Basis eines durch Sol-Gel-Verfahren hergestellten Trägers, der anorganische Oxide, insbesondere Siliciumdioxid und Kohlenstoff enthält, zur erfindungsgemäßen Abwasserbehandlung eingesetzt und regeneriert.

Vorzugsweise wurde ein Katalysator regeneriert, dessen Träger durch Überführen eines Sols in tropfenförmige Solteilchen durch Einsprühen der Solteilchen von unten in ein Reaktionsgas und Auffangen der Solteilchen nach Durchfliegen einer gekrümmten Flugbahn in der Reaktionsflüssigkeit und anschließender Aufarbeitung der verfestigten Solteilchen unter Altern, waschen, Trocknen und Kalzinieren hergestellt wurde, wobei zur Herstellung des Sols anorganische Oxide und eine alkalische Komponente z. B. Kohlenstoff mit einer flüssigen sauren Komponente zunächst zu einem Sol vereinigt und dann versprüht wurden.

Die Trägerkatalysatoren auf Basis von Sol-Gel-Trägern weisen den Vorteil auf, daß sie eine hohe Gleichmäßigkeit aufweisen, und zwar hinsichtlich ihrer äußeren Form und auch im Hinblick auf die stoffliche Qualität. Sie weisen darüber hinaus auch eine hohe mechanische Stabilität auf.

Die Herstellung der Trägerkatalysatoren erfolgt in bekannter Weise, durch Imprägnieren der Träger mit einer wäßrigen Lösung der Metallverbindungen und anschließender Trocknung und Kalzinierung.

Die Regenerierung des Katalysators kann sowohl innerhalb des Reaktors als auch außerhalb des Reaktors erfolgen. In einer bevorzugten Ausführungsform des Verfahrens erfolgt die Regenerierung des Katalysators im Reaktor durch Umschalten der Verfahrensströme.

Das erfindungsgemäße Verfahren zur Regenerierung des erschöpften Katalysators ist in einer bevorzugten Ausführungsform Bestandteil eines Verfahrens zur katalytischen Abwasserbehandlung in Gegenwart von Wasserstoff. Demgemäß wird das Abwasser mit einem pH-Wert von 3 bis 10, vorzugsweise 4 bis 6, in mindestens einen Reaktor, in dem sich der geträgerte Edelmetallkatalysator befindet, eingeleitet und bei 5 bis 80 °C, vorzugsweise 10 bis 30 °C, und 1 bis 10 bar mit Wasserstoff behandelt.

Die katalytische Behandlung kann sowohl in einem Festbett-, einem Wirbelbett- als auch in einem Rührreaktor erfolgen.

Der Wasserstoffeintrag kann entweder durch direktes Einleiten oder durch ein Membranmodul erfolgen. Besonders geeignet sind Membranen mit integralsymmetrischem Aufbau und insbesondere Kompositmembranen. Diese Membranen besitzen eine poröse, wasserbeständige Trägerstruktur und mindestens eine Schicht aus wasserbeständigem, porenfreiem Polymer, an der das zu begasende Abwasser vorbeigeführt wird. Diese porenfreie Schicht besteht z. B. aus Silikonpolymer. Andere Methoden, z. B. über Gassättiger, sind ebenfalls zum H₂-Eintrag geeignet.

Der Wasserstoffeintrag kann entweder gleichzeitig mit dem Kontaktieren des Abwassers mit dem Katalysator erfolgen oder getrennt. Zweckmäßigerweise erfolgt der Wasserstoffeintrag, bevor das Abwasser mit dem Katalysator in Kontakt kommt.

Es versteht sich, daß die Behandlungstemperatur, die Verweilzeit und der pH-Wert des zu dehalogenierenden Abwassers entsprechend den jeweiligen Inhaltsstoffen anzupassen ist. Beispielsweise hat es sich bei der Behandlung von Abwasser aus der Epichlorhydrinsynthese als günstig erwiesen, den Katalysator nach einer Behandlungszeit von etwa 4 bis 8 Stunden zu regenerieren. Um eine gleichbleibende gute Wirkung des Verfahrens sicherzustellen, wird also nach einer festzusetzenden Behandlungszeit, die sich nach den Wasserinhaltsstoffen richtet, die Beaufschlagung des Reaktors mit Abwasser unterbrochen und der Katalysator mit polaren Lösemitteln wie Ketone, Alkohole, Ether, vorzugsweise Aceton oder einem Lösemittelgemisch, gewaschen. In einer anderen Ausführungsform der Erfindung kann anstelle des organischen Lösemittels oder Lösemittelgemisches auch ein Lösemittel-Säuregemisch vorzugsweise im Verhältnis Lösemittel : Säure von 50 Vol.-% zu 50 Vol.-% zum Spülen verwendet werden oder eine gesonderte Behandlung mit Säure nach der Wäsche mit Lösemittel beziehungsweise -gemisch erfolgen. Als Säure werden z. B. Säuren mit einem pk-Wert von < 3, vorzugsweise Salzsäure verwendet. Die Behandlung mit Lösemittel beziehungsweise Lösemittelgemisch sowie die Säurebehandlung kann bei Raumtemperatur erfolgen.

Es ist ebenfalls möglich, vor der Wäsche mit Lösemittel oder mit Lösemittelgemischen eine Säurebehandlung durchzuführen.

Eine Kombination mit einer nachfolgenden thermischen Behandlung ist ebenfalls möglich, vorzugsweise erfolgt die thermische Behandlung bei mindestens 500 °C. Hierbei ist jedoch in der Regel eine anschließende Reaktivierung des Katalysators nach bekannten Methoden z. B. eine Behandlung mit Borhydridlösungen notwendig.

Es hat sich als vorteilhaft erwiesen, einen Regenerierintervall von ca. 7 Stunden einzuhalten, um die Katalysatoraktivität für mehr als 100 Stunden aufrechtzuerhalten, wobei die Menge der Wasserinhaltsstoffe den Zeitabstand der Regenerierung maßgeblich beeinflußt.

Durch diesen kontinuierlichen Wechsel zwischen Dehydrochlorierung und Regenerierung ist es möglich, Abwässer, die neben den organischen Verunreinigungen auch anorganische Ionen z. B. Sulfate, Chloride, Fluoride, Phosphate enthalten, erfolgreich zu reinigen.

Die nachfolgenden Beispiele sollen die Erfindung weiter erläutern, jedoch nicht in ihrem Umfang einschränken.

### Beispiel 1:

In einer 2-Säulen-Festbett-Apparatur befanden sich in jeder Reaktorsäule 200 Gramm Katalysator. Der Katalysatorträger bestand aus 60 Gew.-% Siliziumdioxid und 40 Gew.-% Kohlenstoff und wies eine Teilchengröße von 400 bis 600 µm auf. Auf diesen Träger wurden 1 Gew.-% Pd aufgebracht. In dieser Apparatur wurde Abwasser aus der Epichlorhydrinsynthese` dessen pH-Wert auf 4,5 eingestellt wurde, zunächst mit Wasserstoffgas gesättigt und anschließend katalytisch bei Umgebungstemperatur und einem Vorsäulendruck von 4 bar dehalogeniert. Vor der Behandlung hatte das Abwasser einen AOX-Gehalt von 20 mg/l, nach der Behandlung hatte das Abwasser einen AOX-Gehalt von weniger als 2 mg/l. Durch Regenerierung des Katalysators durch Waschen zunächst mit mindestens 0,5 Liter Aceton und anschließend mit mindestens 0,5 Liter Salzsäure (pH = 3) kann die Katalysatoraktivität bei einem Durchfluß von 10 l/h für mehr als 130 Stunden aufrechterhalten werden. Die Apparatur wurde so benutzt, daß während der Reaktionsdurchführung in einem Katalysatorbett das andere Katalysatorbett regeneriert wurde, wobei ein Regenerierintervall von 7 Stunden eingehalten wurde.

### Beispiel 2:

In einem kontinuierlichen Rührkesselreaktor befand sich 1 Gramm Katalysator analog Beispiel 1 mit einer Teilchengröße < 100 µ. In dieser Apparatur wurde Abwasser aus der Epichlorhydrinsynthese, dessen pH-Wert auf 4,5 eingestellt wurde, bei Normaldruck und Umgebungstemperatur katalytisch behandelt. Das Flüssigkeitsvolumen im Reaktor betrug 300 ml. Es wurde ein Durchfluß von 120 ml/h eingestellt. Die Rührgeschwindigkeit betrug 880 Upm. Aus einer G4-Fritte strömten mindestens 0,5 l/h Wasserstoffgas durch die Flüssigkeit. Vor der Behandlung hatte das Abwasser einen AOX-Gehalt zwischen 19,3 und 24,5 mg/l. Nach der katalytischen Behandlung hatte das Abwasser einen AOX-Gehalt von weniger als 2 mg/l. Durch Regenerierung des Katalysators durch Waschen zunächst mit mindestens 10 ml Aceton und anschließend mit mindestens 10 ml Salzsäure (pH 3) konnte die Katalysatoraktivität für mehr als 140 Stunden aufrechterhalten werden, wobei ein Regenerierintervall von 6 Stunden eingehalten wurde.

## Patentansprüche

1. Verfahren zur Regenerierung eines geträgerten Edelmetallkatalysators, der zur reduktiven Behandlung von Abwässern, zur Entfernung von halogenorganischen, insbesondere chlororganischen Verbindungen in Gegenwart von Wasserstoff verwendet wurde, dadurch gekennzeichnet, daß der Katalysator der anorganische Oxide und/oder Carbide und Kohlenstoff oder anorganisches Oxid oder Carbid als Trägermaterial und Metalle der 8. Nebengruppe des PSE, z.B. Platin, Palladium, Iridium oder Rhodium, insbesondere Palladium als Metallkomponente enthält, zur Entfernung desaktivierender Komponenten bei 5 bis 80 °C mit polarem sauerstoffhaltigem organischem Lösemittel z. B. Keton, Alkohol, Ether oder deren Gemische und/oder Säuren mit einem pk-Wert < 3 behandelt wird, wobei sich gegebenenfalls eine thermische Behandlung anschließen kann.

2. Verfahren zur Regenerierung eines Katalysators nach Anspruch 1,dadurch gekennzeichnet, daß der Katalysator dessen Trägermaterial nach dem Sol-Gel-Verfahren hergestellt wurde, mit sauerstoffhaltigem organischem Lösemittel oder Lösemittelgemisch behandelt wird.

3. Verfahren zur Regenerierung eines Katalysators nach Anspruch 1 und 2, dadurch gekennzeichnet, daß als sauerstoffhaltiges Lösemittel Aceton verwendet wird.

4. Verfahren zur Regenerierung eines Katalysators nach Anspruch 1, dadurch gekennzeichnet, daß der Katalysator mit Säure behandelt wird.

5. Verfahren zur Regenerierung eines Katalysators nach Anspruch 1 und 4, dadurch gekennzeichnet, daß als Säure Salzsäure verwendet wird.

6. Verfahren zur Regenerierung eines Katalysators nach Anspruch 1 bis 5, dadurch gekennzeichnet, daß der Katalysators mit einem Lösemittel-Säure-Gemisch im Verhältnis 50 : 50 behandelt wird.

7. Verfahren zur Regenerierung eines Katalysators nach Anspruch 1 bis 6, dadurch gekennzeichnet, daß der Katalysator mit Lösemittel oder Lösemittelgemisch und anschließend mit Säure oder zuerst mit Säure und anschließend mit Lösemittel oder Lösemittelgemisch behandelt wird.

8. Verfahren zur Regenerierung eines Katalysators nach Anspruch 1 bis 7, dadurch gekennzeichnet, daß der Katalysator, der als Träger Aluminiumoxid, Magnesiumoxid, Titanoxid, Zirkonoxid, Siliciumoxid oder Siliciumcarbid oder Kombinationen dieser Stoffe miteinander oder mit Kohlenstoff enthält, mit Aceton und/oder Salzsäure bei einer Temperatur von 10 bis 30 °C behandelt wird.

9. Verfahren zur Regenerierung eines Katalysators nach Anspruch 1 bis 8, dadurch gekennzeichnet, daß ein Katalysator, der zur reduktiven Behandlung von Abwässern der Epichlorhydrinsynthese verwendet wurde, regeneriert wird.

10. Verfahren zur Regenerierung eines Katalysators nach Anspruch 1 bis 9, dadurch gekennzeichnet, daß das Regenerierungsverfahren Bestandteil des Abwasserbehandlungsverfahrens ist, wobei wahlweise das Abwasser dehalogeniert und/oder der Katalysator regeneriert wird.

## Claims

1. A method for the regeneration of a supported precious metal catalyst which has been used for the reductive treatment of waste water, for removing halo-organic, in particular chloro-organic, compounds in the presence of hydrogen, characterised in that the catalyst which contains inorganic oxides and/or carbides and carbon or inorganic oxide or carbide as support material and metals of the 8th subgroup of the periodic table, e.g. platinum, palladium, iridium or rhodium, in particular palladium, as metal component is treated to remove deactivating constituents at 5 to 80°C with polar oxygen-containing organic solvent, e.g. ketone, alcohol, ether or mixtures thereof and/or acids having a pH value of < 3, with thermal treatment optionally following.

2. A method for the regeneration of a catalyst according to Claim 1, characterised in that the catalyst, the support of which has been produced according to the sol/gel method, is treated with oxygen-containing organic solvent or solvent mixture.

3. A method for the regeneration of a catalyst according to Claim 1 and 2, characterised in that acetone is used as the oxygen-containing solvent.

4. A method for the regeneration of a catalyst according to Claim 1, characterised in that the catalyst is treated with acid.

5. A method for the regeneration of a catalyst according to Claims 1 and 4, characterised in that hydrochloric acid is used as acid.

6. A method for the regeneration of a catalyst according to Claims 1 to 5, characterised in that the catalyst is treated with a solvent/acid mixture in a ratio of 50 : 50.

7. A method for the regeneration of a catalyst according to Claims 1 to 6, characterised in that the catalyst is treated with solvent or solvent mixture and then with acid, or first with acid and then with solvent or solvent mixture.

8. A method for the regeneration of a catalyst according to Claims 1 to 7, characterised in that the catalyst, which contains as support aluminium oxide, magnesium oxide, titanium oxide, zirconium oxide, silicon oxide or silicon carbide or combinations of these substances with one another or with carbon, is treated with acetone and/or hydrochloric acid at a temperature of 10 to 30°C.

9. A method for the regeneration of a catalyst according to Claims 1 to 8, characterised in that a catalyst which has been used for the reductive treatment of waste waters from epichlorohydrin synthesis is regenerated.

10. A method for the regeneration of a catalyst according to Claims 1 to 9, characterised in that the regeneration method forms part of the waste water treatment process, in which case alternatively the waste water is dehalogenated and/or the catalyst is regenerated.

## Revendications

1. Procédé de régénération d'un catalyseur qui à base de métaux nobles sur un support, qui a servi pour le traitement réducteur d'eaux résiduaires, pour éliminer des composés organiques halogénés, en particulier des composés organiques chlorés, en présence d'hydrogène, procédé caractérisé par le fait que le catalyseur contient des oxydes et/ou des carbures minéraux et du carbone ou de l'oxyde ou du carbure minéral comme matière de support et des métaux du 8ème sous-groupe de la Classification Périodique des Eléments, par exemple du platine, du palladium, de l'iridium ou du rhodium, notamment du palladium, comme constituant métallique, procédé selon lequel le catalyseur est traité à 5 jusqu'à 80°C par des solvants organiques polaires contenant de l'oxygène, par exemple une cétone, de l'alcool, de l'éther ou leur(s) mélange(s) et/ou par des acides ayant une valeur de l'indice pk inférieure à 3 pour éliminer des constituants désactivateurs, ce qui peut être éventuellement suivi d'un traitement thermique.

2. Procédé de régénération d'un catalyseur selon la revendication 1, caractérisé en ce que le catalyseur dont la matière de support a été produite selon le procédé Sol-Gel est traité par un solvant organique contenant de l'oxygène ou par un mélange de solvants organiques contenant de l'oxygène.

3. Procédé de régénération d'un catalyseur selon la revendication 1 et la revendication 2, caractérisé en ce qu'on utilise l'acétone comme solvant contenant de l'oxygène.

4. Procédé de régénération d'un catalyseur selon la revendication 1, caractérisé en ce que le catalyseur est traité par un acide.

5. Procédé de régénération d'un catalyseur selon la revendication 1 et la revendication 4, caractérisé en ce qu'on utilise l'acide chlorhydrique comme acide.

6. Procédé de régénération d'un catalyseur selon l'une des revendications 1 à 5, caractérisé en ce que le catalyseur est traité par un mélange solvant/acide utilisé selon le rapport de 50.50.

7. Procédé de régénération d'un catalyseur selon l'une des revendications 1 à 6, caractérisé en ce que le catalyseur est traité par du solvant ou par un mélange de solvants, puis par de l'acide ou bien tout d'abord par de l'acide et ensuite par un solvant ou par un mélange de solvants.

8. Procédé de régénération d'un catalyseur selon l'une des revendications 1 à 7, caractérisé en ce que le catalyseur, qui contient comme support de l'oxyde d'aluminium, de l'oxyde de magnésium, de l'oxyde de titane, de l'oxyde de zirconium, de l'oxyde de silicium ou du carbure de silicium ou des combinaisons de ces matières les unes avec les autres ou avec du carbone, est traité par de l'acétone et/ou par de l'acide chlorhydrique à une température de 10 à 30°C.

9. Procédé de régénération d'un catalyseur selon l'une des revendications 1 à 8, caractérisé en ce qu'on régénère un catalyseur qui a servi au traitement réducteur d'eaux résiduaires provenant de la synthèse de l'épichlorhydrine.

10. Procédé de régénération d'un catalyseur selon l'une des revendications 1 à 9, caractérisé par le fait que le procédé de régénération fait partie du procédé de traitement de l'eau résiduaire, selon lequel on effectue au choix la déshalogénation de l'eau résiduaire et/ou la régénération du catalyseur.
